# EUROPÄISCHE PATENTANMELDUNG

(11) **EP 0 875 416 A2**
(43) Veröffentlichungstag der Anmeldung: **04.11.1998**
(21) Anmeldenummer: 98106839.8
(22) Anmeldetag: 15.04.1998
(51) Int. Cl.: B60N 2/36

(54) **Kippbare Rückenlehne für einen Rücksitz eines Kraftfahrzeuges**

(30) Priorität: 29.04.1997 DE 19718067
(71) Anmelder: Bayerische Motoren Werke Aktiengesellschaft, 80788 München (DE)
(72) Erfinder: Ippendorf, Günter, 81675 München (DE); Stubenberger, Andreas, 80939 München (DE); Tietje, Peter, 85777 Fahrenzhausen (DE); Moser, Erhard, 80939 München (DE); Tobisch, Franz, 81541 München (DE); Walsdorf, Christian, 80809 München (DE)

(57) **Zusammenfassung**

Die tragende Struktur einer kippbaren Rückenlehne (1) für einen Rücksitz eines Kraftfahrzeuges wird im wesentlichen von einem einzigen Strangprofil (2) gebildet, dessen Herstellrichtung in Richtung der Breitenerstreckung des Rücksitzes verläuft.

## Beschreibung

Die Erfindung bezieht sich auf eine kippbare Rückenlehne für einen Rücksitz eines Fahrzeuges, insbesondere eines Personenkraftwagens.

Im Gegensatz zu feststehenden Rückenlehnen, deren tragende Struktur unmittelbar von der Karosserie des Kraftfahrzeuges gebildet wird, werden an kippbare Rückenlehnen von Rücksitzen erhöhte Anforderungen gestellt. Derartige Rückenlehnen werden beispielsweise bei sogenannten Kombifahrzeugen oder bei Limousinen mit einer Durchlademöglichkeit zwischen dem Innenraum und dem Gepäckraum eingesetzt. Hierzu muß die kippbare Rückenlehne in sich selbst eine ausreichende Steifigkeit und Festigkeit aufweisen, gekoppelt mit einer stabilen Anbindung an die Karosserie, damit bei einer starken Fahrzeugverzögerung Ladegut aus dem Gepäckraum unter keinen Umständen die Rückenlehne durchdringen oder ein Herauslösen der Rückenlehne aus ihrer Verankerung bewirken kann. Außerdem sind gegebenenfalls Elemente des Insassen-Rückhaltesystems in die kippbare Rückenlehne zu integrieren.

Aus den genannten Bedingungen resultiert ein aufwendiger Aufbau der Rückenlehne, die in der Regel aus einem flächigen Blechteil, das durch Sicken versteift ist, sowie einem zusätzlichen Rahmen, beispielsweise aus rohrförmigen Elementen, besteht. Hieraus ergeben sich hohe Herstellkosten sowie eine hohes Gewicht. Insbesondere die Sicherung gegen Ladegut aus dem Gepäckraum kann Probleme bereiten. Durch die Blech-Rahmen-Verbundbauweise ist außerdem ein eigenes Verkleidungsteil zum Gepäckraum hin erforderlich.

Aufgabe der Erfindung ist es, eine kippbare Rückenlehne für einen Rücksitz bereitzustellen, die bei einfachem Aufbau dennoch hohen Anforderungen an die Insassensicherheit gerecht wird.

Diese Aufgabe wird durch die Merkmale des Anspruchs 1 gelöst.

Kerngedanke ist es hierbei, die tragende Struktur der Rückenlehne aus einem durchgehenden Strangprofil zu bilden, das bevorzugt als Hohlkammerprofil ausgebildet und aus einer Aluminiumlegierung hergestellt ist. Hieraus ergibt sich eine Reihe von Vorteilen: Im Gegensatz zur aufwendigen Verbundbauweise aus Blech- und Rahmenbauteilen ist das Strangprofil in einem einzigen Arbeitsgang bei vergleichsweise niedrigen Werkzeugkosten einfach herzustellen und lediglich auf die benötigte Rückenlehnenbreite abzulängen. Strangprofile zeichnen sich zudem durch eine hohe Festigkeit und Steifigkeit bei geringem Gewicht aus. Die Herstellung über ein Strangpreßverfahren erlaubt eine weitestgehend freie Gestaltung des Querschnitts, wobei unterschiedliche Festigkeitsanforderungen über der Querschnittsfläche berücksichtigt werden können. Bei entsprechender Ausbildung des Strangprofils ist eine hohe Sicherheit gegen Durchdringung der Rückenlehne auch bei spitzen Gegenständen im Ladegut gegeben.

Zwar ist aus der EP 0 330 594 B1 ein Fahrzeugsitz bekannt, der teilweise aus Strangprofilen aufgebaut ist. Es handelt sich bei diesem bekannten Sitz jedoch um eine Sitzbank für ein öffentliches Verkehrsmittel, die vollständig andersartig aufgebaut ist und anderen Anforderungen zu genügen hat, als sie bei kippbaren Rückenlehnen, insbesondere für Personenkraftwagen, vorliegen. So ist die bekannte Rückenlehne starr an einen durchgehenden Hauptträger aus einem Strangprofil angebunden und besteht aus einem flächigen Blechbauteil, das seitlich und oberseitig durch versteifende Elemente begrenzt wird.

Das die Rückenlehne bildende Strangprofil ist entsprechend der benötigten Breite der Rückenlehne durch spanende Bearbeitung abgelängt, gegebenenfalls mit einer gekrümmten Begrenzungslinie, wie sie beispielsweise durch das hintere Radhaus eines Personenkraftwagens erforderlich sein kann. Das seitliche Abschlußteil (Anspruch 2) deckt diese Bearbeitungsfläche zumindest teilweise ab und verschließt beispielsweise den offenen Hohlraum des Strangprofils. Grundsätzlich kann das Abschlußteil aus einem Kunststoffmaterial bestehen und z. B. im Spritzgußverfahren hergestellt werden. Auch ein Blechtiefziehteil ist vorstellbar.

Wird das Abschlußteil entsprechend massiv und steif ausgeführt, beispielsweise als Guß- oder Schmiedeteil aus einer Leichtmetall-Legierung, so können über das Abschlußteil vergleichsweise hohe Kräfte in die Rückenlehne eingeleitet werden. Derartige Kräfte treten beispielsweise an einer Verriegelungseinrichtung auf, die die Rückenlehne in ihrer aufrechten Position fixiert (Anspruch 3). Auch über die Kippachse der Rückenlehne erfolgt eine Krafteinleitung. Durch die Verlagerung der genannten Krafteinleitungspunkte vom Strangprofil auf ein entsprechend gestaltetes Abschlußteil sind am Strangprofil keine Modifikationen erforderlich.

Durch die formschlüssige Anbindung des Abschlußteils gemäß Anspruch 4 ergibt sich eine direkte Krafteinleitung sowie eine einfache Verbindungstechnik. Sofern das Strangprofil Hohlräume aufweist, können vom Abschlußteil abstehende Rippen in die Kammern des Hohlprofils eingreifen und bewirken hierdurch eine großflächige Kraftübertragung.

Durch die Unterteilung des Hohlprofils in einzelne Kammern (Anspruch 5) ergibt sich eine Erhöhung der Steifigkeit der Rückenlehne. Dabei verlaufen die Trennwände, bezogen auf die aufrechte Position der Rückenlehne, bevorzugt etwa horizontal, um eine gleichmäßige Abstützung gegenüber in Längsrichtung des Fahrzeugs auftretenden Kräften zu gewährleisten. Auch können die vordere und hintere Begrenzungswand des Strangprofils durch schräg verlaufende Wände miteinander verbunden sein.

Durch die Möglichkeit, den Querschnitt des Strangprofils weitestgehend frei zu gestalten, kann ein dem Rücken des menschlichen Körpers angepaßtes Profil des Strangprofils realisiert werden (Anspruch 6), so daß eine Polsterauflage mit etwa gleichmäßiger Dicke unmittelbar auf die Tragstruktur aufgebracht werden kann.

Durch die Ausgestaltung der Rückenlehne nach Anspruch 7 ist im Gegensatz zu einer Verbundbauweise aus Blech- und Rahmenbauteilen kein eigenes Verkleidungsteil zum Gepäckraum hin erforderlich. Hierdurch lassen sich Kosten und Gewicht der Rückenlehne senken. Die rückwärtige Oberfläche des Strangprofils kann beispielsweise durch Eloxieren oder durch eine andersartige Auflage mit geringer Schichtdicke in kostengünstiger Weise ansprechend gestaltet werden.

Da das Strangprofil der Rückenlehne eine hohe Steifigkeit und Festigkeit aufweist, ist es gemäß Anspruch 8 ohne weiteres möglich, beispielsweise einen Aufrollautomaten für eine Dreipunkt-Sicherheitsgurtanordnung an der Rückenlehne anzubringen. Dies geschieht in optisch ansprechender Weise durch eine Aussparung, in die der Gurtaufroller eingesetzt wird. Insbesondere Strangprofile mit innenliegenden Trennwänden sind ausreichend steif, um die hohen, bei einem Fahrzeugcrash eingeleiteten Kräfte aufzunehmen und in die Fahrzeugkarosserie weiterzuleiten.

Durch das Einschieben einer Aufnahme für eine Kopfstütze (Anspruch 9) ist diese stabil und formschlüssig an die Rückenlehne angebunden. Alternativ können in das Strangprofil Hülsen eingesetzt werden, die die Führungsstangen einer Kopfstütze aufnehmen (Anspruch 10).

Die gleichmäßig hohe Festigkeit und Steifigkeit von Strangprofilen ermöglicht es, gemäß Anspruch 11 einen Durchbruch in der Rückenlehne zu schaffen, durch den bei aufrechter Position der Rückenlehne längliche Gegenstände, beispielsweise Skier, hindurchgeführt werden können.

Mögliche Ausführungsbeispiele der Erfindung sind in der Zeichnung dargestellt und werden nachfolgend näher erläutert. Es zeigt:
- Fig. 1 und 2: ein erstes Ausführungsbeispiel der Erfindung in Explosionsdarstellung,
- Fig. 3: ein zweites Ausführungsbeispiel der Erfindung in perspektivischer Vorderansicht und
- Fig. 4: ein drittes Ausführungsbeispiel der Erfindung in drei Schnittdarstellungen.

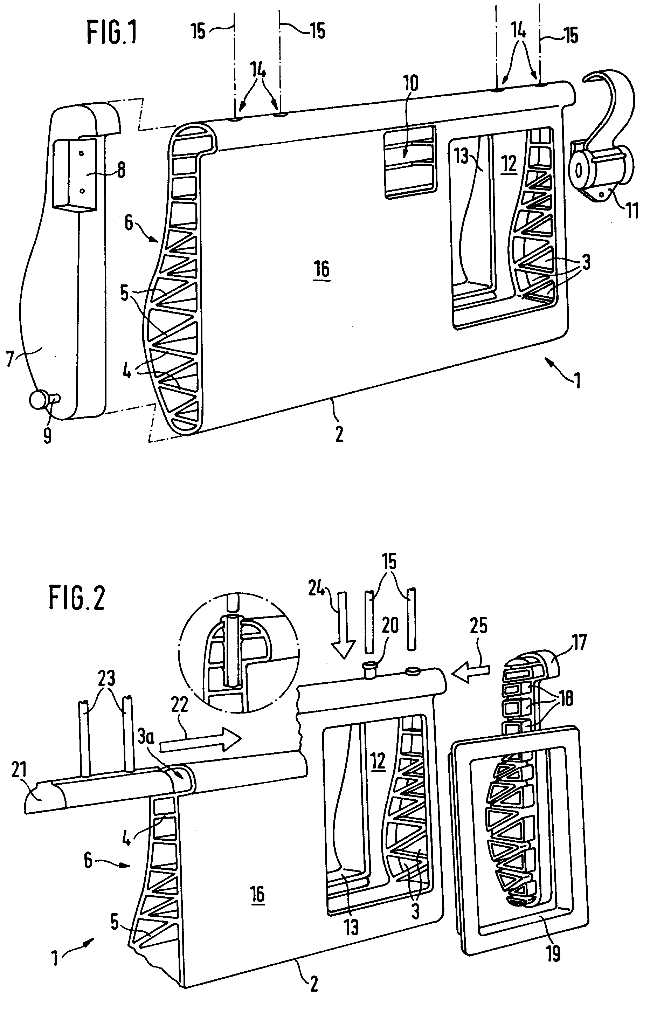

Die Figuren 1 und 2 zeigen eine mit 1 bezeichneten Rückenlehne, die Bestandteil eines Rücksitzes eines Personenkraftwagens ist. Sie ist kippbar ausgebildet, so daß eine Durchlademöglichkeit zwischen dem Innenraum des Personenkraftwagens und seinem Gepäckraum gegeben ist. Dabei kann die gesamte Rückenlehne im Verhältnis 2:1 umgekippt werden, wobei der dargestellte Abschnitt der Rückenlehne 1 sich über zwei Drittel der Fahrzeugbreite erstreckt. Der verbleibende Teil der Rückenlehne, der einem weiteren Sitzplatz zugeordnet ist, ist nicht dargestellt.

Die Rückenlehne wird im wesentlichen von einem Strangprofil 2 gebildet, das sich in Fahrzeugquerrichtung erstreckt. Das Strangprofil 2 ist als geschlossenes Mehrkammer-Hohlprofil ausgebildet und besteht aus einer Aluminium-Legierung. Es weist eine Vielzahl von Kammern 3 auf, die von Trennwänden 4 und 5 begrenzt werden. Bezogen auf die dargestellte aufrechte Gebrauchslage der Rückenlehne 1 verlaufen die Trennwände 4 annähernd horizontal, während die Trennwände 5 schräg gerichtet sind.

Der offene äußere seitliche Endabschnitt 6 des Strangprofils 2 wird durch ein Abschlußteil 7 verschlossen. Das Abschlußteil 7 ist als Aluminium-Schmiedeteil ausgebildet. Es weist eine Aussparung 8 für eine nicht dargestellte Verriegelungseinrichtung auf. Die Verriegelungseinrichtung arretiert die Rückenlehne 1 in ihrer aufrechten Gebrauchsposition. Die Kipplagerung der Rückenlehne 1 erfolgt über eine bolzenförmige Kippachse 9, die am unteren Endabschnitt des Abschlußteils 7 angeordnet ist.

Das Strangprofil 2 ist etwa mittig mit einer Aussparung 10 für einen Gurtaufroller 11 versehen, der Teil einer Dreipunkt-Gurtanordnung für einen mittleren Fondpassagier ist. Der Gurtaufroller wird in die Aussparung 10 eingesetzt und mit dem Strangprofil 2 verschraubt. Ein Durchbruch 12 in Form eines rechteckförmigen Fensters ermöglicht die Durchführung länglicher Gegenstände, beispielsweise von Skiern, durch die aufrechte Rückenlehne 1. Der Durchbruch 12 ist innenseitig mit einer Verkleidung 13 versehen. Oberseitig sind am Strangprofil 2 Führungen 14 für schematisch angedeutete Führungsstangen 15 von Kopfstützen vorgesehen, die den beiden Sitzplätzen der Rückenlehne 1 zugeordnet sind. Die Rückseite 16 des Strangprofils 2 ist ebenflächig gestaltet und bildet unmittelbar die gepäckraumseitige Sichtfläche.

In Figur 2 sind weitere Anbauteile und Ausgestaltungen der Rückenlehne 1 dargestellt. So ist unter anderem ein inneres seitliches Abschlußteil 17 ergänzt, das dem Strangprofil 2 zugewandte Fortsätze 18 aufweist, die in Richtung des Pfeils 25 formschlüssig in die einzelnen Kammern 3 des Strangprofils 2 eingesetzt werden können. Außerdem ist der Durchbruch 12 durch eine rahmenförmige Verkleidung 19 eingefaßt. Des weiteren sind zwei Möglichkeiten zur Anbindung von Kopfstützen an das Strangprofil 2 näher dargestellt: Zum einen kann eine Kopfstütze mit ihren Führungsstangen 15 gemäß der Richtung des Pfeils 24 in hülsenartige Einsätze 20 eingeschoben werden (rechter Teil der Fig. 2 sowie Ausschnittsvergrößerung). Andererseits zeigt die Darstellung im linken Teil der Figur 2 die Möglichkeit, in die oberste Kammer 3a des Strangprofils 2 einen Kopfstützenträger 21 in Richtung des Pfeils 22 einzuschieben. Der Kopfstützenträger 21 weist fest angeordnete Führungsstangen 23 auf, für die an der Oberseite der Kammer 3a eine schlitzförmige Aussparung vorgesehen ist.

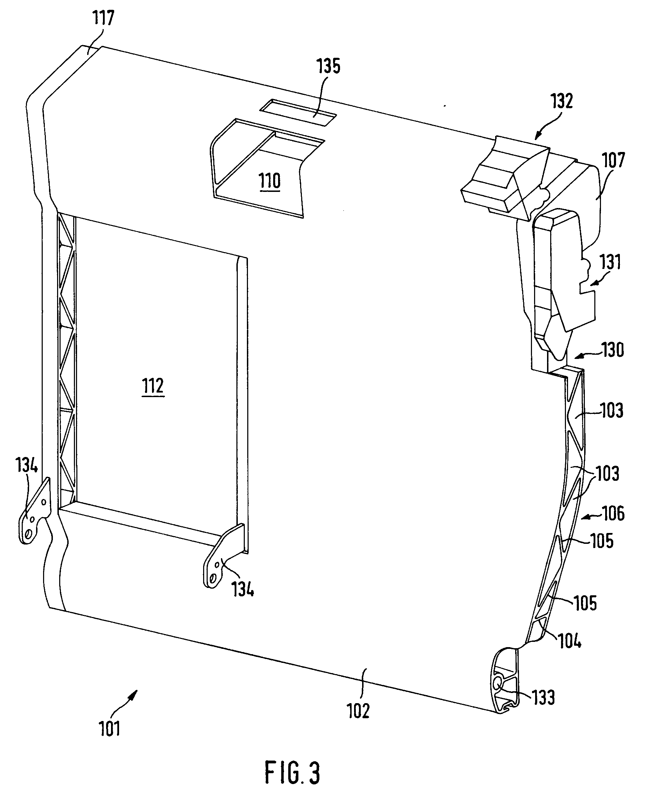

Fig. 3 zeigt eine Variante einer erfindungsgemäßen Rückenlehne 101. Die tragende Struktur der Rückenlehne 101 wird von einem Strangprofil 102 mit mehreren Kammern 103 gebildet, die durch Trennwände 104 und 105 voneinander getrennt sind. Ein Durchbruch 112, ein inneres Abschlußteil 117 sowie eine Aussparung 110 für einen Gurtaufroller sind analog zum ersten Ausführungsbeispiel auch hier vorgesehen. Benachbart zur Aussparung 110 ist ein Schlitz 135 zur Durchführung des Gurtbandes angebracht. Die Aussparung 110 wird durch eine nicht dargestellte Kunststoffblende abgedeckt.

Am äußeren seitlichen Endabschnitt 106 des Strangprofils 102 befindet sich im Unterschied zur Rückenlehne 1 gemäß den Fig. 1 und 2 ein Absatz 130, in den ein Abschlußteil 107 eingesetzt ist, das sich nur über einen Teil der Höhe des Strangprofils 102 erstreckt. Dieses Abschlußteil 107 dient der Aufnahme einer Verriegelungseinrichtung 131, die mit einer oberseitigen Entriegelungseinrichtung 132 zusammenwirkt. Der mittlere und untere Bereich des seitlichen Endabschnittes 106 ist entsprechend der Kontur des hinteren Radhauses des Personenkraftwagens krummlinig beschnitten und mit einer nicht dargestellten Kunststoffabdeckung versehen. Am unteren Endabschnitt des Strangprofils 102 ist eine Aufnahme 133 für eine nicht dargestellte Kippachse zur Lagerung der Rückenlehne 101 vorgesehen. Des weiteren sind an das Strangprofil im Bereich des Durchbruches 112 Halter 134 für eine Mittelarmlehne angeschweißt.

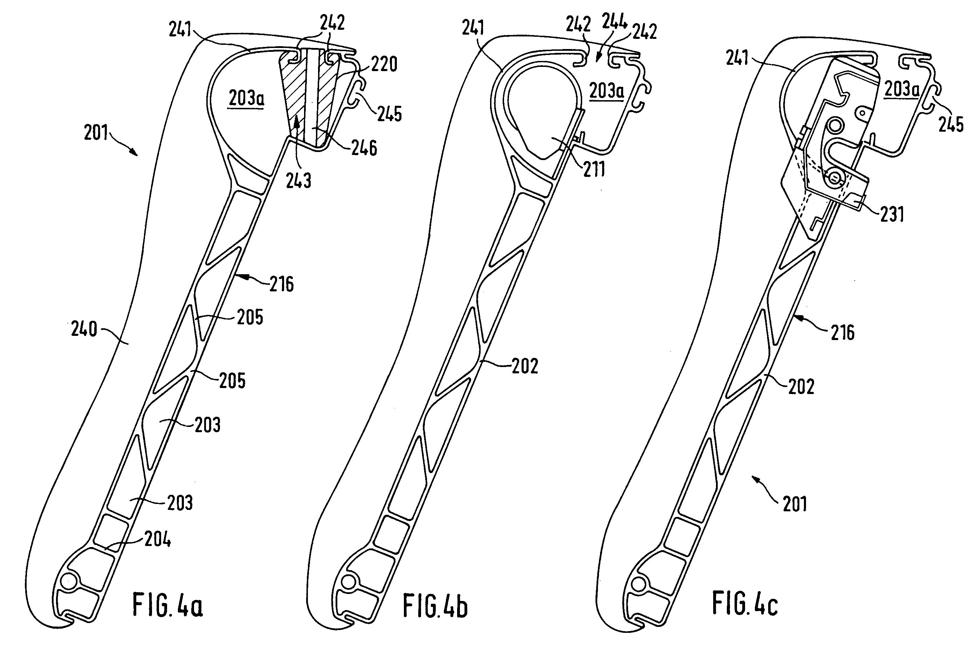

Figur 4 zeigt in drei, in Fahrzeugquerrichtung gegeneinander versetzten Schnittdarstellungen eine weitere erfindungsgemäße Rückenlehne 201 aus einem Strangprofil 202, das insassenseitig mit einem nur schematisch dargestellten Polsterteil 240 versehen ist. Das Strangprofil 202 weist eine Mehrzahl von Kammern 203 auf, die durch Trennwände 204 und 205 voneinander getrennt sind. Nachfolgend soll insbesondere näher auf die oberste Kammer 203a eingegangen werden, die zur Aufnahme unterschiedlicher Komponenten ausgebildet ist.

Gemäß Figur 4a ist wenigstens ein Kopfstützenträger 221 in die Kammer 203a eingeschoben. Der Träger 221 ist massiv in einem Kunststoffmaterial ausgeführt und weist zwei Einstecköffnungen 246 für die Führungsstangen einer Kopfstütze auf. Der Kopfstützenträger 221 ist einerseits über umgebogene Randbereiche 242 der Außenkontur 241 des Strangprofils 202 und andererseits über einen in die Kammer 203a hineinragenden Steg 243 geführt.

An der glattflächigen und ebenen Rückseite 216 des Strangprofils 201 ist oberseitig eine geschlitzte Kammer 245 vorgesehen, in die Anbau- oder Verkleidungsteile eingesetzt werden können.

Die bauchige Kontur 241 des Strangprofils 202 ermöglicht die Unterbringung eines Gurtaufrollers 211 in der Kammer 203a (Figur 4b). Durch die von den umgebogenen Randbereichen 242 begrenzte schlitzförmige Öffnung 244 kann das Gurtband des Gurtaufrollers 211 hindurchgeführt werden. Die Kopfstützenträger 221 wirken hierbei einer Aufweitung der Öffnung 244 durch ein unter Last stehendes Gurtband entgegen.

Schließlich ist gemäß Figur 4c am seitlichen Endabschnitt des Strangprofils 202 im Bereich der Kammer 203a eine Verriegelungseinrichtung 231 eingesetzt (unter Zwischenschaltung eines nicht dargestellten seitlichen Abschlußteils analog den Figuren 1 bis 3).

## Patentansprüche

1. Kippbare Rückenlehne für einen Rücksitz eines Fahrzeuges, insbesondere eines Personenkraftwagens,
dadurch gekennzeichnet, daß die tragende Struktur der Rückenlehne (1; 101; 201) im wesentlichen von einem einzigen Strangprofil (2; 102; 202) gebildet wird, dessen Herstellrichtung in Richtung der Breitenerstreckung des Rücksitzes verläuft.

2. Rückenlehne nach Anspruch 1,
dadurch gekennzeichnet, daß an wenigstens einem Seitenbereich des Strangprofils (2; 102) ein seitliches Abschlußteil (7, 17; 107, 117) vorgesehen ist.

3. Rückenlehne nach Anspruch 1 und/oder 2,
dadurch gekennzeichnet, daß das seitliche Abschlußteil (7; 107) eine Achse (9) zur Lagerung der Rückenlehne (1) und/oder eine Einrichtung (131) zur Verriegelung der Rückenlehne (101) in ihrer aufrechten Position aufnimmt.

4. Rückenlehne nach Anspruch 2 und/oder 3,
dadurch gekennzeichnet, daß das seitliche Abschlußteil (17) formschlüssig in das Strangprofil (2) eingreift.

5. Rückenlehne nach einem der vorangegangenen Ansprüche,
dadurch gekennzeichnet, daß das Strangprofil (2; 102; 202) als Hohlprofil mit wenigstens einer innenliegenden Wand (4, 5; 104, 105; 204, 205) zur Bildung einzelner Kammern (3; 103; 203) ausgebildet ist.

6. Rückenlehne nach einem der vorgenannten Ansprüche,
dadurch gekennzeichnet, daß das Strangprofil (2; 102) an seiner dem Insassen zugewandten Vorderseite eine der Körperkontur eines Insassen entsprechende Formgebung aufweist.

7. Rückenlehne nach einem der vorangegangenen Ansprüche,
dadurch gekennzeichnet, daß das Strangprofil (2; 102; 202) an seiner dem Insassen abgewandten Rückseite (16; 216) glattflächig ausgeführt ist.

8. Rückenlehne nach einem der vorangegangenen Ansprüche,
dadurch gekennzeichnet, daß das Strangprofil (2; 102; 202) wenigstens eine Aussparung (10; 110) zur Aufnahme eines Elementes (11; 211) eines Insassen-Rückhaltesystems aufweist.

9. Rückenlehne nach einem der vorangegangenen Ansprüche,
dadurch gekennzeichnet, daß das Strangprofil (2; 202) wenigstens eine Kammer (3a; 203a) aufweist, in die eine Aufnahme (21; 221) für eine Kopfstütze einschiebbar ist.

10. Rückenlehne nach einem der Ansprüche 1 bis 8,
dadurch gekennzeichnet, daß in das Strangprofil (2) hülsenartige Einsätze (20) zur Aufnahme von Führungsstangen (15) einer Kopfstütze eingesetzt sind.

11. Rückenlehne nach einem der vorangegangenen Ansprüche,
dadurch gekennzeichnet, daß das Strangprofil (2; 102) eine Aussparung (12; 112) zur Durchführung länglicher, im Fahrzeug zu transportierender Gegenstände aufweist.
